# DEMANDE DE BREVET EUROPEEN

(11) **EP 1 555 058 A1**
(43) Date de publication de la demande: **20.07.2005**
(21) Numéro de dépôt: 05290020.6
(22) Date de dépôt: 05.01.2005
(51) Int. Cl.: B01D 35/18, B01D 36/00, B01D 29/96

(54) **Filtre à liquide pour moteur à combustion interne et cartouche filtrante interchangeable pour un tel filtre**

(30) Priorité: 14.01.2004 FR 0400317
(71) Demandeur: Filtrauto, 78286 Guyancourt Cedex (FR)
(72) Inventeur: Fremont, Laurent Bernard, 28410 BU (FR)
(74) Mandataire: Garel, Régis

(57) **Abrégé**

Filtre comprenant une tête (2) et une cartouche interchangeable (3) dotée d'un insert filtrant (29) contenu dans boîtier étanche (14). La tête comporte des entrées et sorties de liquide (4, 5) qui communiquent avec la cartouche interchangeable par emboîtement mutuel de conduits tous centrés sur un axe de révolution commun (Z) . La cartouche interchangeable est montée sous la tête (2) par des pattes (36) engagées chacune sur un rebord (43) appartenant à la tête.

## Description

La présente invention est relative aux filtres à liquide pour moteurs à combustion interne et aux cartouches filtrantes interchangeables pour de tels filtres.

Plus particulièrement, l'invention concerne un filtre à liquide pour moteur à combustion interne, comprenant :
- une tête comportant une entrée de liquide et une sortie de liquide,
- une cartouche interchangeable fixée à la tête de façon amovible et comprenant elle-même :
   . un boîtier étanche délimitant un espace intérieur creux,
   . un élément filtrant séparant l'espace intérieur du boîtier étanche en un espace d'amont et un espace d'aval,
   . un premier dispositif d'étanchéité reliant de façon étanche l'entrée de liquide à l'espace d'amont,
   . un deuxième dispositif d'étanchéité reliant de façon étanche la sortie de liquide à l'espace d'aval.

Le document EP-A-0 658 362 décrit un exemple d'un tel filtre, dans lequel la cartouche interchangeable est fixée à la tête par l'intermédiaire d'une bague vissable, qui présente notamment les inconvénients suivants :
- le vissage de la bague est une opération qui peut s'avérer assez fastidieuse lorsque le filtre est installé dans un environnement très encombré, notamment dans un bloc motopropulseur de véhicule automobile,
- le serrage adéquat de la bague vissable, qui assure le bon montage du filtre, est difficile à garantir notamment lorsque la bague est peu accessible,
- la bague vissable peut éventuellement tomber ou être perdue lors du remplacement de la cartouche filtrante.

La présente invention a notamment pour but de pallier ces inconvénients.

A cet effet, selon l'invention, un filtre du genre en question est caractérisé en ce que la cartouche interchangeable est solidarisée axialement avec la tête par au moins deux pattes portées par un premier élément choisi parmi la tête et la cartouche interchangeable, lesdites pattes coopérant par engagement élastique avec au moins un rebord appartenant à un deuxième élément choisi parmi la tête et la cartouche interchangeable (l'élasticité de l'engagement peut être due aux pattes elles-mêmes, ou à un autre élément).

Grâce à ces dispositions, on évite l'emploi de la bague vissable de l'art antérieur et on permet ainsi un montage plus simple et plus fiable de la cartouche interchangeable.

Dans des modes de réalisation préférés de l'invention, on peut éventuellement avoir recours en outre à l'une et/ou à l'autre des dispositions suivantes :
- selon un premier mode de réalisation, lesdites pattes sont élastiques et comportent des becs d'accrochage engagés élastiquement sur ledit rebord ;
- les premier et deuxième dispositifs d'étanchéité présentent une symétrie de révolution autour d'un même axe central, ledit rebord est circulaire et centré sur l'axe central, et la cartouche interchangeable est montée sur la tête de façon à pouvoir tourner autour de l'axe central ;
- les becs d'accrochage de toutes les pattes élastiques sont engagés sur le même rebord circulaire, qui s'étend sur un tour complet ;
- le rebord appartient à la tête et les pattes élastiques appartiennent au boîtier de la cartouche interchangeable ;
- les pattes élastique sont moulées en matière plastique, d'une seule pièce avec au moins une partie du boîtier de la cartouche interchangeable ;
- chaque patte élastique s'étend parallèlement à l'axe central entre une extrémité arrière formant un organe d'appui et une extrémité avant qui comporte le bec d'accrochage de ladite patte élastique, la patte élastique étant montée sur une charnière élastique entre lesdites extrémités avant et arrière de façon qu'un appui sur ledit organe d'appui déplace le bec d'accrochage radialement vers l'extérieur en le dégageant du rebord ;
- le bec de chaque patte élastique comporte une surface de came inclinée qui s'étend en biais radialement vers l'intérieur depuis une extrémité avant de la patte élastique vers l'extrémité arrière et qui est disposée pour coopérer par effet de came avec le rebord lorsque la cartouche interchangeable est engagée par emboîtement axial sur la tête, en repoussant alors élastiquement le bec d'accrochage radialement vers l'extérieur, le bec d'accrochage comportant en outre une face d'arrêt qui est orientée à l'opposé de la surface de came, ladite face d'arrêt étant adaptée pour venir s'engager élastiquement contre le rebord circulaire ;
- selon un deuxième mode de réalisation, les premier et deuxième dispositifs d'étanchéité présentent une symétrie de révolution autour d'un même axe central, les pattes coopèrent avec le rebord par un montage à baïonnette, et la cartouche interchangeable est sollicitée élastiquement à l'écartement par rapport à la tête ;
- chaque rebord comporte une face d'appui dotée d'un évidemment dans lequel est engagée une des pattes, ledit rebord délimitant une ouverture débouchant axialement, adaptée pour permettre le passage de ladite patte lors du montage et du démontage de la cartouche interchangeable ;
- selon le deuxième mode de réalisation, le rebord appartient à la tête et les pattes appartiennent au boîtier de la cartouche interchangeable ;
- les pattes sont moulées en matière plastique, d'une seule pièce avec au moins une partie du boîtier de la cartouche interchangeable ;
- selon le premier et le deuxième mode de réalisation, le filtre constitue un filtre à gazole dans lequel la tête comporte au moins un élément choisi parmi un dispositif de dégazage de gazole et un dispositif de réchauffage de gazole ;
- la tête comporte d'une part, une embase qui est destinée à être fixée à un support externe et qui est fixée au boîtier au moyen desdites pattes, et d'autre part, une coiffe qui est soudée à l'embase et qui comporte au moins un raccord appartenant à l'entrée de liquide et un raccord appartenant à la sortie de liquide ;
- la coiffe et l'embase sont soudées ensemble le long de deux parties annulaires en regard l'une de l'autre, ces deux parties annulaires étant symétriques de révolution autour d'un même axe central ;
- la coiffe et l'embase sont réalisées en matière plastique ;
- la coiffe comporte en outre un dispositif de réchauffage pour réchauffer le liquide arrivant par l'entrée de liquide, et au moins un connecteur électrique relié au dispositif de réchauffage ;
- la coiffe comporte en outre au moins un dispositif d'élimination d'air ;
- le filtre constitue un filtre à gazole dans lequel la cartouche interchangeable comporte au moins un élément choisi parmi un dispositif de purge d'eau et un dispositif de détection d'eau ;
- le boîtier comporte d'une part, une paroi latérale qui est fixée à la tête au moyen desdites pattes, et d'autre part, un fond qui ferme le boîtier à l'opposé de la tête, le fond étant soudé à la paroi latérale ;
- la paroi latérale et le fond sont soudés ensemble le long de deux parties annulaires en regard l'une de l'autre, ces deux parties annulaires étant symétriques de révolution autour d'un même axe central ;
- la paroi latérale et le fond du boîtier sont réalisés en matière plastique ;
- le fond du boîtier comporte au moins un élément choisi parmi un dispositif de purge d'eau et un dispositif de détection d'eau.

Par ailleurs l'invention a également pour objet une cartouche interchangeable pour un filtre tel que défini ci-dessus, cette cartouche interchangeable comportant :
- un boîtier étanche qui délimite un espace intérieur creux qui communique avec l'extérieur par l'intermédiaire de deux passages de liquide associés respectivement à des premier et deuxième dispositifs d'étanchéité annulaires centrés sur un même axe central et destinés à relier respectivement les deux passages de liquide indépendamment l'un de l'autre à une entrée de liquide et à une sortie de liquide appartenant à la tête du filtre,
- un élément filtrant séparant l'espace intérieur du boîtier étanche en un espace d'amont et un espace d'aval, le boîtier comportant au moins deux pattes adaptées pour coopérer par engagement avec au moins un rebord appartenant à la tête du filtre.

Dans des modes de réalisation de cette cartouche interchangeable, on peut éventuellement avoir recours en outre à l'une et/ou à l'autre des dispositions suivantes :
- au moins un des passages de liquide est fermé de façon étanche par un obturateur adapté pour être ouvert avant mise en service de la cartouche ;
- l'obturateur ferme au moins le passage de liquide communiquant avec l'espace d'aval ;
- chacun des deux passages de liquide est fermé de façon étanche par un obturateur adapté pour être ouvert avant mise en service de la cartouche ;
- les deux passages de liquide sont fermés par le même obturateur ;
- l'obturateur est un opercule détachable ;
- l'obturateur est un opercule déchirable.

Plus généralement, l'invention a aussi pour objet une cartouche interchangeable pour un filtre à liquide pour moteur à combustion interne, cette cartouche interchangeable comporte un boîtier étanche qui délimite un espace intérieur creux contenant un élément filtrant, ce boîtier étanche présentant au moins une ouverture qui communique avec l'espace intérieur creux, laquelle ouverture est fermée de façon étanche par un obturateur adapté pour être ouvert avant mise en service de la cartouche.

De plus, l'invention a encore pour objet un filtre à liquide pour moteur à combustion interne, comprenant :
- une coiffe comportant une entrée de liquide et une sortie de liquide communiquant respectivement avec un espace d'amont et un espace d'aval séparés l'un de l'autre par un élément filtrant,
- et une embase destinée à être fixée à un support externe (notamment un bloc motopropulseur de véhicule ou une caisse de véhicule), la coiffe étant soudée à l'embase.

Enfin, l'invention a aussi pour objet un filtre à liquide pour moteur à combustion interne comprenant un boîtier étanche qui délimite un espace intérieur creux dans lequel est logé un élément filtrant qui sépare ledit espace intérieur en un espace d'amont et un espace d'aval, le filtre comportant en outre une entrée de liquide qui communique avec l'espace d'amont et une sortie de liquide qui communique avec l'espace d'aval, le boîtier comportant une paroi latérale qui s'étend axialement entre d'une part, une tête qui inclut l'entrée de liquide et la sortie de liquide, et d'autre part, un fond qui ferme le boîtier à l'opposé de la tête, le fond étant soudé à la paroi latérale.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue en perspective d'un filtre selon une première forme de réalisation de l'invention,
- la figure 2 est une vue en coupe verticale du filtre de la figure 1,
- la figure 3 est une vue en coupe verticale de la cartouche interchangeable appartenant au filtre des figures 1 et 2, en position de stockage avant mise en place dans le filtre,
- la figure 4 est une vue en coupe verticale d'un filtre selon une deuxième forme de réalisation de l'invention,
- la figure 5 est une vue en coupe partielle du filtre de la figure 4, la coupe étant prise selon la ligne V-V de la figure 6,
- et la figure 6 est une vue en coupe partielle du filtre des figures 4 et 5, la coupe étant prise selon la ligne VI-VI de la figure 5.

Sur les différentes figures, les mêmes références désignent des éléments identiques ou similaires.

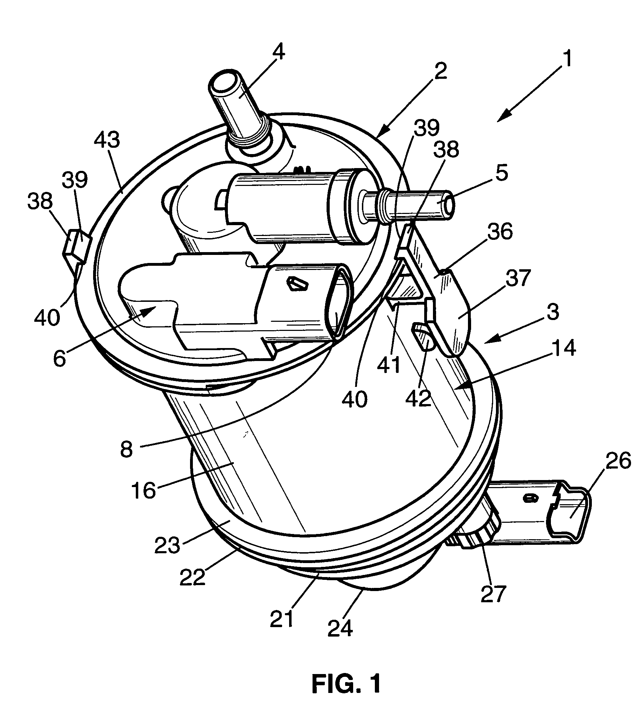

La figure 1 représente un filtre à liquide 1 pour moteur à combustion interne, notamment un filtre à gazole pour moteur diesel de véhicule automobile.

Le filtre 1 comporte une tête 2 sous laquelle est fixée une cartouche interchangeable 3.

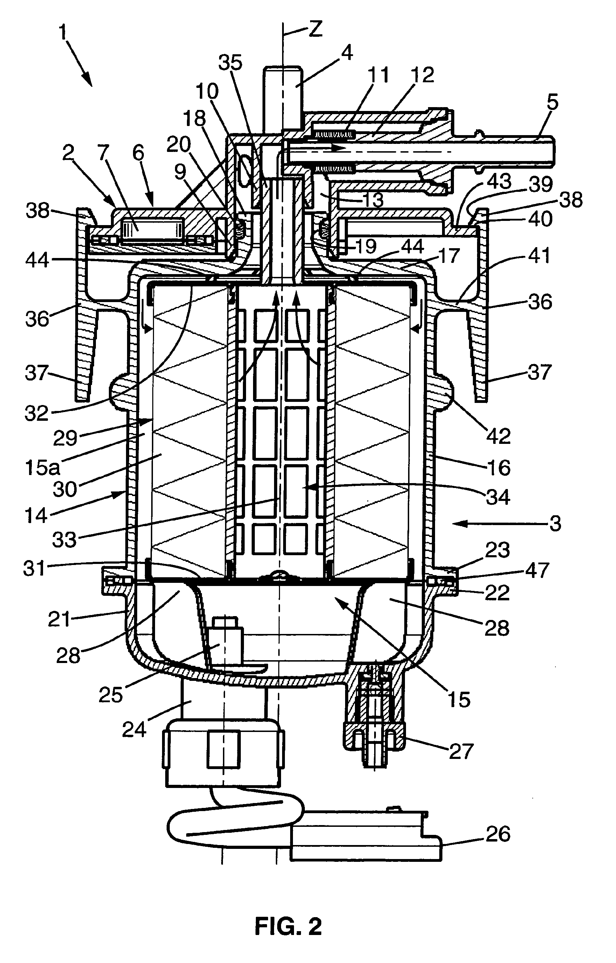

La tête 2 est réalisée par exemple en matière plastique moulée, notamment en polyamide 6-6 (par exemple en PA 66 GF 30), et comporte une entrée de gazole 4 qui inclut un raccord d'entrée 4a et une sortie de gazole 5 qui inclut un raccord de sortie 5a, bien visibles sur les figures 1 et 2. Ces raccords d'entrée et de sortie de gazole sont raccordés au circuit d'alimentation en gazole du véhicule (non représenté) et la tête 2 est fixée au bloc motopropulseur du véhicule (non représenté).

Avantageusement, la tête 2 peut comporter en outre un dispositif de réchauffage de gazole 6 qui communique avec l'entrée de gazole 4 et qui comprend par exemple un ou plusieurs éléments résistifs CTP 7 alimentés électriquement par l'intermédiaire d'un connecteur 8.

L'entrée de gazole 4 comprend également un conduit vertical 9 ouvert vers le bas, de préférence cylindrique, qui présente une forme de révolution centrée sur un axe vertical Z et qui appartient à la tête 2.

Par ailleurs, la sortie de gazole 5 communique avec un conduit vertical 10 ouvert vers le bas, appartenant à la tête 2, qui est disposé à l'intérieur du conduit 9 et qui présente également une forme de révolution centrée sur l'axe Z, de préférence cylindrique.

Avantageusement, la tête 2 comporte en outre un dispositif de dégazage de gazole 11, qui peut être constitué par exemple par une paroi poreuse réalisée notamment en métal fritté ou autre et qui délimite partiellement un conduit 12 communiquant avec la sortie de gazole 5.

Ce conduit 12 traverse une chambre de collecte d'air 13 qui communique avec l'entrée de gazole 4 et qui constitue un point haut du filtre 1 de façon que l'air qui pourrait le cas échéant entrer dans le filtre 1 s'accumule dans ladite chambre 13. Ainsi, l'air contenu dans la chambre 13 passe régulièrement et avec un très faible débit vers la sortie de gazole 5, sans perturber le bon fonctionnement du moteur diesel alimenté par l'intermédiaire du filtre 1.

La cartouche interchangeable 3, quant à elle, comporte un boîtier étanche 14 réalisé en matière plastique, par exemple en polyamide 6-6 (par exemple en PA 66 GF 30), qui délimite un espace intérieur creux 15.

Le boîtier 14 comporte une paroi latérale annulaire 16 présentant avantageusement une forme cylindrique de révolution centrée sur l'axe Z, qui se prolonge radialement vers l'intérieur, à son extrémité supérieure, par une paroi annulaire 17 elle-même prolongée axialement vers le haut par un col formant un conduit 18 ouvert vers le haut.

Ce conduit 18 présente une forme extérieure de révolution centrée sur l'axe Z, de préférence cylindrique, et il est emboîté avec étanchéité dans le conduit 9 susmentionné. Le conduit 18 peut comporter une gorge annulaire extérieure 19 dans laquelle est logée un joint torique 20 en élastomère qui permet d'obtenir une étanchéité parfaite entre les conduits 9, 18.

A son extrémité inférieure, la paroi latérale 16 se raccorde par ailleurs à un fond 21 qui appartient également au boîtier 14 mais qui est de préférence une pièce rapportée. Dans l'exemple représenté, le fond 21 comporte à son extrémité supérieure une bride annulaire 22 qui est fixée, par exemple par soudage ultrasons ou autre, à une bride correspondante 23 formée à l'extrémité inférieure de la paroi latérale 16.

Les brides 22, 23 présentent de préférence des faces en regard qui sont symétriques de révolution autour de l'axe Z, et peuvent être soudées par exemple le long d'une ligne de soudage circulaire 47.

Le fond 21 du boîtier comporte en outre un conduit vertical 24 ouvert vers le bas, dans lequel est fixé avec étanchéité un capteur d'eau 25 doté d'un connecteur électrique externe 26. Le capteur d'eau 25 est adapté pour délivrer un signal électrique indiquant la présence d'eau dans le filtre 1, lorsqu'une quantité d'eau suffisante s'est accumulée dans le fond 21.

Ce signal est transmis par exemple au tableau de bord du véhicule, de façon que l'utilisateur du véhicule ou un agent de maintenance puisse alors purger le filtre 1 de son eau, par exemple au moyen d'une vis de purge 27 également prévue dans le fond 21 du boîtier 14.

Le fond 21 du boîtier 14 est également pourvu de nervures d'appui verticales 28 sur lesquelles vient s'appuyer axialement un élément filtrant 29 contenu dans l'espace intérieur 15 du boîtier.

Cet élément filtrant comporte une paroi latérale poreuse 30, réalisée par exemple en papier filtre plissé ou similaire. Cette paroi latérale poreuse présente une forme annulaire, de préférence cylindrique de révolution et centrée sur l'axe Z, qui s'étend axialement entre deux faces d'extrémité obturées de façon étanche par des flasques d'extrémité 31, 32 qui sont de préférence réalisés en matière plastique ou le cas échéant en métal.

Ces deux flasques 31, 32 sont reliés entre eux, dans l'exemple considéré, par un tube ajouré 33 en matière plastique qui est disposé à l'intérieur de la paroi latérale poreuse 30 et qui délimite un espace intérieur creux 34 ou espace d'aval, séparé d'un espace d'amont 15a par l'élément filtrant 29.

L'espace intérieur 34 est fermé vers le bas par le flasque d'extrémité inférieur 31 qui forme un disque complet, mais ledit espace intérieur débouche vers le haut dans un conduit 35 lui-même ouvert vers le haut, qui présente une forme de révolution centrée sur l'axe Z, de préférence cylindrique, et qui est emboîté avec étanchéité dans le conduit 10 susmentionné.

Le conduit 35 traverse le flasque d'extrémité supérieur 32 de l'élément filtrant et il est solidarisé avec celui-ci, par exemple par soudage ultrasons si le conduit 35 et le flasque supérieur 32 sont tous deux réalisés en matière plastique, ou encore par collage, ou autre. En variante, le conduit 35 et le flasque supérieur 32 pourraient être moulés d'une seule pièce.

Les conduits 35 et 18 susmentionnés sont maintenus emboîtés dans les conduits 9 et 10 de la tête 2 au moyen d'une pluralité de pattes élastiques 36, qui dans l'exemple considéré sont au nombre de deux et qui sont disposées dans des positions diamétralement opposées par rapport à l'axe Z.

Chacune de ces pattes élastiques 36 s'étend parallèlement à l'axe Z entre d'une part, une extrémité arrière 37 disposée vers le bas, qui forme un organe d'appui plat, et d'autre part, une extrémité avant disposée vers le haut, qui forme un bec d'accrochage 38 faisant saillie radialement vers l'intérieur.

Le bec d'accrochage 38 présente avantageusement une surface de came 39 qui s'étend en biais radialement vers l'intérieur et vers le bas à partir de l'extrémité avant de la patte élastique, et une face d'arrêt 40 orientée vers le bas, qui s'étend radialement au dessous de la surface de came 39.

Entre ces extrémités arrière 37 et avant 38, chaque patte élastique 36 comporte en outre une charnière élastique 41, qui est de préférence moulée en matière plastique, d'une seule pièce avec la patte 36 et avec la partie supérieure du boîtier 14. De plus, la paroi latérale 16 du boîtier 14 comporte avantageusement deux bossages 42 en regard des extrémités inférieures 37 des pattes élastiques, qui limitent la déformation des charnières 41 lorsqu'on appuie sur les extrémités 37 des pattes 36.

Les becs d'accrochage 38 des deux pattes élastiques sont adaptés pour venir s'engager élastiquement, par encliquetage, sur un rebord circulaire 43 appartenant à la tête 2 et s'étendant de préférence sur 360°.

Avantageusement, les surfaces de came 39 des deux pattes élastiques 36 sont disposées pour que la mise en place de la cartouche interchangeable 3 sous la tête 2 se fasse par simple emboîtement axial, les surfaces de came 39 venant alors en appui radial contre le rebord circulaire 43 de façon à déplacer élastiquement les becs d'accrochage 38, radialement vers l'extérieur, jusqu'à ce que les faces d'arrêt 40 desdits becs d'accrochage aient dépassé le rebord 43, après quoi les becs d'accrochage se rabattent élastiquement au dessus du rebord 43 sous la sollicitation des charnières élastiques 41.

Lorsque la cartouche interchangeable 3 est ainsi connectée à la tête 2, le filtre 1 peut recevoir un flux de gazole par l'entrée de gazole 4, ce flux de gazole pénétrant alors dans la cartouche interchangeable 3 par le conduit 18. Ce flux de gazole passe entre la paroi supérieure 17 du boîtier du filtre et le flasque d'extrémité supérieur 32 de l'insert filtrant, lequel flasque est maintenu écarté de la paroi 17 par exemple par des bossages 44 ménagés dans la face inférieure de cette paroi 17. Le flux de gazole traverse ensuite la paroi poreuse 30 de l'insert filtrant 29 puis arrive dans l'espace intérieur 34 de l'insert filtrant et repart vers le bloc motopropulseur en passant par le conduit 35 et la sortie de gazole 5.

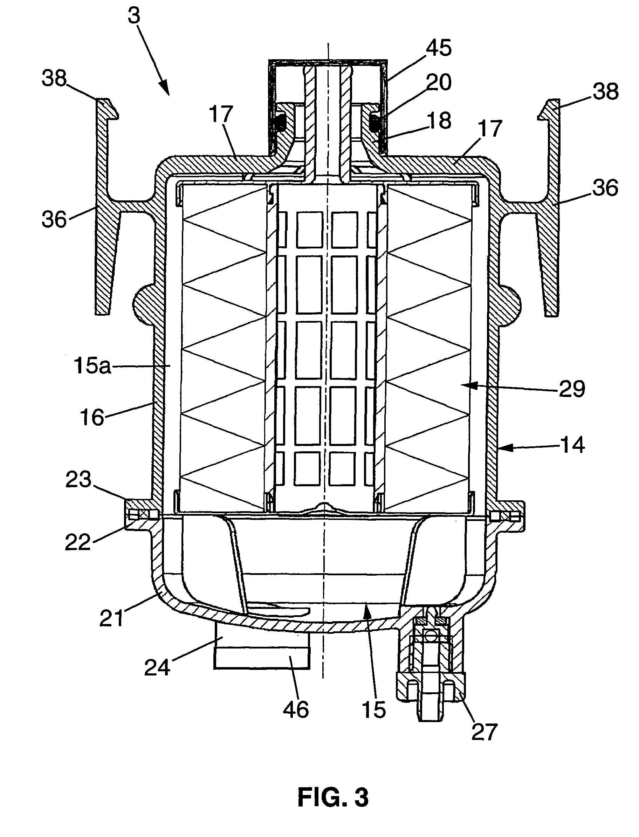

Lorsque la cartouche interchangeable 3 est arrivée en fin de vie, il suffit de la déboîter de la tête 2 après avoir dégagé les becs d'accrochage 38 par simple appui sur les extrémités inférieures 37 des pattes élastiques, puis on remet en place une nouvelle cartouche interchangeable 3 telle que celle représentée sur la figure 3, qui est montrée en position de stockage. On notera que le démontage de la cartouche interchangeable ne génère normalement aucune pollution ni salissure, dès lors que cette cartouche est maintenue droite et rebouchée après démontage.

Dans cette position de stockage, la cartouche interchangeable 3 comporte avantageusement un bouchon amovible 45 qui est emboîté autour du conduit 18 en protégeant ainsi la cartouche 3 contre l'entrée de corps étrangers à l'intérieur de son boîtier 14. En variante, ce bouchon 45 peut être remplacé par un opercule détachable ou déchirable.

De plus, pour les mêmes raisons, le conduit inférieur 24 de la cartouche filtrante peut également être fermé par un bouchon 46 vissé ou emboîté, ou encore par un opercule détachable ou déchirable. Dans ce cas, le détecteur d'eau 25 est réutilisé lors du changement de cartouche 3 et est fixé à l'intérieur du conduit 24 au moment de la mise en place de la nouvelle cartouche interchangeable 3 dans le véhicule. En variante, la nouvelle cartouche interchangeable 3 pourrait éventuellement être livrée avec son détecteur d'eau 25 déjà fixé de façon définitive dans le fond 21 de son boîtier 14, lequel détecteur serait remplacé à chaque changement de cartouche 3.

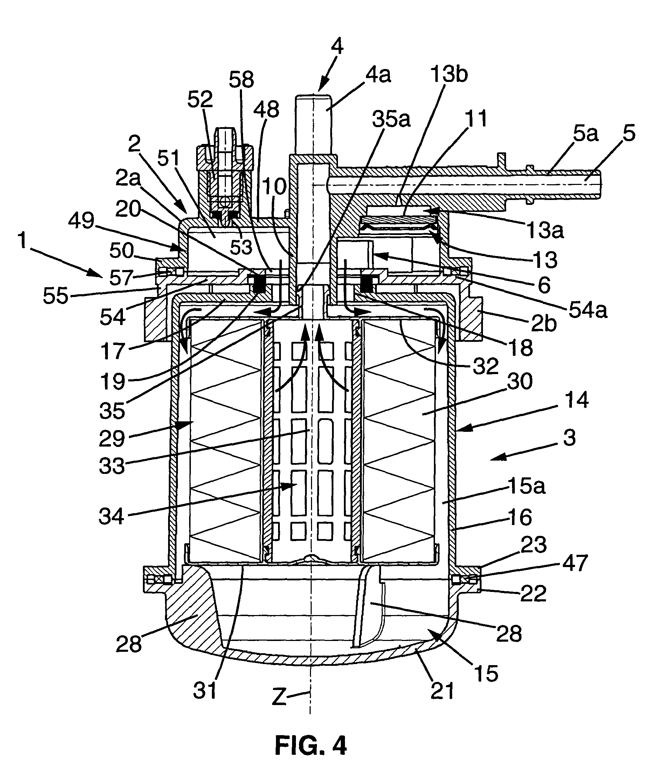

Dans la deuxième forme de réalisation de l'invention, représentée sur les figures 4 à 6, le filtre à liquide 1 peut notamment être constitué, comme dans la première forme de réalisation décrite ci-dessus par un filtre à gazole pour moteur diesel de véhicule automobile.

Ce filtre 1 comporte une tête 2 sous laquelle est fixée une cartouche interchangeable 3.

La tête 2 est réalisée par exemple en matière plastique moulée, notamment en polyamide 6-6 (par exemple en PA-66 GF 30), et peut avantageusement être réalisée en deux parties soudées l'une à l'autre, savoir d'une part, une coiffe 2a et d'autre part, une embase 2b.

La coiffe 2a comporte un raccord d'entrée 4a appartenant à une entrée de gazole 4 et un raccord de sortie 5a appartenant à une sortie de gazole 5.

De plus, avantageusement, la tête 2 peut comporter en outre un dispositif de réchauffage de gazole 6 comprenant par exemple un ou plusieurs éléments résistifs CTP alimentés électriquement par l'intermédiaire d'un connecteur 8.

Avantageusement, la coiffe 2a peut présenter sensiblement une forme de cloche comprenant une paroi supérieure 48 prolongée vers le bas par une jupe périphérique 49 qui s'étend axialement, selon l'axe central Z du filtre, jusqu'à une bride annulaire 50 s'étendant radialement vers l'extérieur.

La coiffe 2a délimite ainsi une chambre 51 qui appartient à l'entrée de gazole 4 et dans laquelle est situé le dispositif de réchauffage de gazole.

Cette chambre 51 peut être dotée d'une vis de purge d'air 52 qui peut sélectivement fermer ou ouvrir un orifice 53 ménagé dans la paroi supérieure 48.

De plus, la coiffe 2a peut comporter en outre un dispositif de dégazage de gazole 11 fonctionnant en continu, qui peut comprendre par exemple une paroi poreuse réalisée notamment en céramique ou en métal fritté et qui est disposée dans une chambre de collecte d'air 13 ménagée en partie supérieure de la chambre 51 susmentionnée.

Cette chambre de collecte d'air 13 constitue un point haut du filtre 1. La paroi poreuse 11 forme la paroi supérieure de la chambre de collecte d'air 13, et sépare cette chambre de collecte d'air d'une chambre auxiliaire 13a qui communique avec la sortie de gazole 5 par l'intermédiaire d'un orifice 13b qui présente avantageusement une très faible section de passage (l'orifice 13b peut par exemple présenter un diamètre inférieur à 1 mm, voir inférieur à 0,5 mm).

Ainsi, l'air qui pourrait éventuellement entrer dans le filtre 1 s'accumule dans la chambre 13 et passe régulièrement avec un très faible débit vers la sortie de gazole 5, sans perturber le bon fonctionnement du moteur diesel alimenté par l'intermédiaire du filtre 1.

L'embase 2b de la tête comporte par ailleurs une paroi supérieure 54 qui est prolongée vers le bas par une jupe périphérique 55 qui présente de préférence une forme de révolution centrée sur l'axe central Z du filtre.

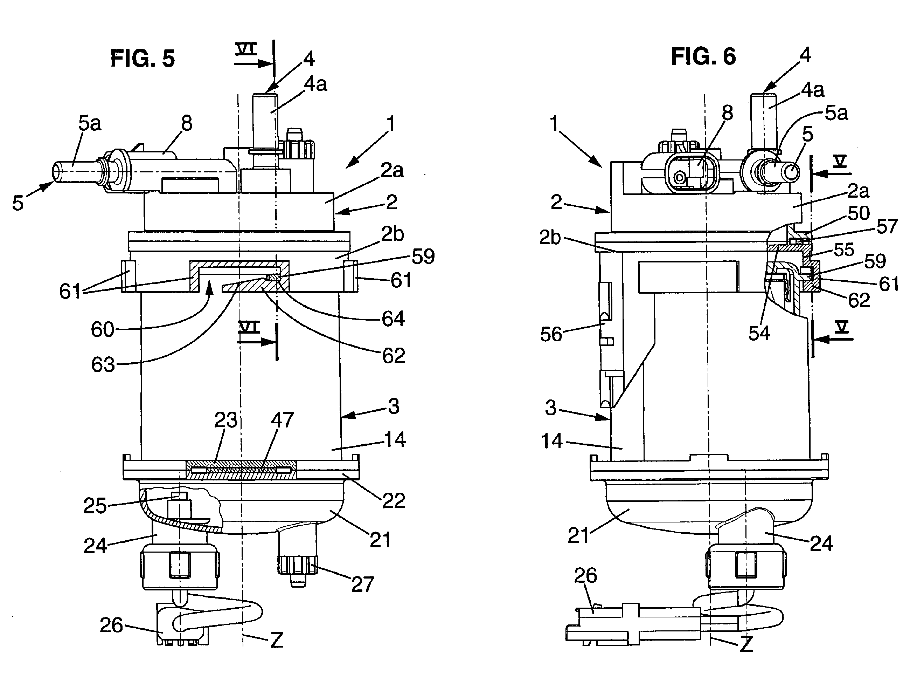

L'embase 2b est solidaire d'une platine de fixation 56 (voir figure 6) ou autre dispositif de fixation permettant de solidariser ladite embase avec le bloc motopropulseur du véhicule (non représenté).

Avantageusement, la bride 50 de la coiffe 2a est soudée avec une partie périphérique 54a de la partie supérieure 54 de l'embase 2b, le long d'une ligne de soudure circulaire 57, centrée sur l'axe Z. les parties en contact mutuel, appartenant respectivement à la coiffe 2a et à l'embase 2b, sont avantageusement symétriques de révolution autour de l'axe Z, de façon que l'on puisse choisir l'orientation angulaire de la coiffe 2a par rapport à l'embase 2b lors de l'assemblage de ladite coiffe avec la tête, ce qui permet de choisir l'orientation de la coiffe 2a et notamment des raccords 4a, 5a et du connecteur 8 à l'intérieur du compartiment moteur du véhicule.

Il est ainsi possible de standardiser la fabrication d'au moins une partie de la tête 2 tout en permettant d'obtenir des configurations différentes de la tête 2 lors de l'assemblage de la coiffe avec l'embase.

A titre d'exemple, ces dispositions permettent :
- de fabriquer un modèle de coiffe 2a unique et un modèle d'embase 2b également unique, tout en permettant d'obtenir des orientations différentes de la coiffe par rapport au compartiment moteur, selon le véhicule auquel est destiné le filtre 1,
- ou d'utiliser un même modèle de coiffe 2a avec plusieurs types d'embases 2b, de façon à réaliser des têtes 2 destinées à plusieurs types de véhicules (cet avantage est obtenu même si des parties soudées 50, 54a ne sont pas de révolution),
- ou encore d'assembler un même modèle d'embase 2b avec plusieurs types de coiffe 2a, de façon à obtenir plusieurs types de têtes 2 destinées à plusieurs types de véhicules (cet avantage est obtenu même si des parties soudées 50, 54a ne sont pas de révolution).

Par ailleurs, la cartouche interchangeable 3 comporte un boîtier étanche 14 réalisé en matière plastique, par exemple en polyamide 6-6 (par exemple en PA 66 GF 30), qui délimite un espace intérieur creux 15.

Le boîtier 14 comporte une paroi latérale annulaire 16 présentant avantageusement une forme cylindrique de révolution centrée sur l'axe Z, qui se prolonge radialement vers l'intérieur, à son extrémité supérieure, par une paroi supérieure annulaire 17 formant par exemple un col qui délimite un conduit 18 ouvert vers le haut.

Ce col 18 peut comporter une gorge annulaire 19 ouverte vers le haut dans laquelle est logé un joint annulaire 20 en élastomère adapté pour venir en appui élastique axial sous la partie supérieure 54 de l'embase 2b, autour d'une ouverture 58 ménagée dans ladite paroi supérieure 54.

Ainsi, l'entrée de gazole 4 communique, par l'intermédiaire de la chambre 51, de l'orifice 57 et du conduit 18, avec un espace d'amont 15a appartenant à l'espace intérieur creux 15 du boîtier 14.

Par ailleurs, à son extrémité inférieure, la paroi latérale 16 du boîtier 14 se raccorde à un fond 21 appartenant également au boîtier 14. Ce fond 21 peut comporter à son extrémité supérieure une bride annulaire 22 qui est fixée de préférence par soudage et notamment par soudage ultrasons, le long d'une ligne circulaire de soudage 47 centrée sur l'axe Z, à une bride correspondante 23 formée à l'extrémité inférieure de la paroi latérale 16.

Le fond 21 du boîtier peut comporter un conduit vertical 24 ouvert vers le bas, dans lequel est fixé avec étanchéité un capteur d'eau 25 doté d'un connecteur électrique externe 26. Ce capteur d'eau 25 est adapté pour délivrer un signal électrique indiquant la présence d'eau dans le filtre 1, lorsqu'une quantité d'eau suffisante s'est accumulée dans le fond 21. Ce signal est transmis par exemple au tableau de bord du véhicule, de façon que l'utilisateur du véhicule ou un agent de maintenance puisse alors purger le filtre 1 de son eau, par exemple au moyen d'une vis de purge 27 également prévue dans le fond 21 du boîtier 14.

Avantageusement, les brides 22 et 23 présentent des faces en regard qui sont symétriques de révolution autour de l'axe Z, ce qui permet de choisir l'orientation angulaire relative du fond 21 par rapport à la paroi latérale 16 du boîtier lors de leur assemblage.

Il est ainsi possible de standardiser les fabrications de la partie supérieure (paroi latérale 16 et paroi supérieure annulaire 17) et/ou du fond 21 du boîtier 14, tout en différenciant plusieurs types de boîtiers 14 lors de l'assemblage de la partie supérieure avec le fond, suivant les types de véhicules auxquels sont destinés les filtres.

On peut ainsi, par exemple, fabriquer un seul modèle de partie supérieure 16, 17 et un seul modèle de fond 21 pour le boîtier 14, tout en réalisant plusieurs types de cartouches interchangeables 3, destinées à plusieurs types de véhicules, en orientant différemment le fond 21 par rapport à la partie supérieure 16, 17 lors de leur assemblage par soudure.

De plus, il est également possible, pour un même type de partie supérieure 16, 17 du boîtier 14, d'utiliser plusieurs types de fonds 21 présentant par exemple des hauteurs différentes et/ou équipés ou non pour recevoir le détecteur d'eau 25 et/ou comportant des équipements différents. Ce dernier avantage peut également être obtenu même lorsque les faces en regard des brides 22, 23 ne sont pas symétriques de révolution autour de l'axe Z si l'on ne souhaite pas pouvoir orienter angulairement le fond 21 par rapport à la paroi latérale 16.

De la même façon, les dispositions précitées, avec ou sans la forme symétrique de révolution des faces en regard des brides 22, 23, permettent d'utiliser un même type de fond 21 pour plusieurs parties supérieures 16, 17 différentes du boîtier 14 (par exemple des parties supérieures comportant des moyens de fixation différents avec la tête 2 ou encore des parties supérieures présentant des hauteurs différentes), de façon à réaliser plusieurs types de filtres destinés à plusieurs modèles de véhicules.

Les avantages susmentionnés sont également obtenus dans la première forme de réalisation de l'invention, décrite précédemment.

Par ailleurs, le fond 21 du boîtier 14 peut être pourvu de nervures d'appui vertical 20 suite sur lesquelles vient s'appuyer axialement un élément filtrant 29 contenu dans l'espace intérieur 15 du boîtier.

Cet élément filtrant comporte une paroi latérale poreuse 30, réalisée par exemple en papier filtre plissé ou similaire. Cette paroi latérale poreuse peut présenter une forme annulaire, de préférence cylindrique de révolution centrée sur l'axe Z, qui s'étend axialement entre deux faces d'extrémité obturées de façon étanche par des flasques d'extrémité 31, 32 qui sont par exemple réalisés en matière plastique ou le cas échéant en métal.

Ces deux flasques 31, 32 sont reliés entre eux dans l'exemple considéré, par un tube ajouré 33 en matière plastique qui est disposé à l'intérieur de la paroi latérale poreuse 30.

La paroi latérale poreuse 30 de l'élément filtrant subdivise l'espace intérieur 15 du boîtier 14 en un espace d'amont 15a, extérieur à ladite paroi latérale 30, et en un espace d'aval 34 intérieur à ladite paroi latérale.

L'espace d'aval 34 est fermé par le bas par le flasque d'extrémité inférieur 31, qui forme un disque complet, mais ledit espace d'aval 34 débouche vers le haut par un conduit 35 qui présente une forme de révolution centrée sur l'axe Z, de préférence cylindrique, et qui est emboîté avec étanchéité dans un conduit 10 qui appartient à la sortie de gazole 5 et qui relie le conduit 35 au raccord de sortie 5a en traversant l'ouverture 58 dans l'exemple considéré ici. Le conduit 10 peut avantageusement être cylindrique de révolution autour de l'axe Z.

Avantageusement, le conduit 35 peut comporter une lèvre annulaire d'étanchéité extérieure 35a qui est engagée avec étanchéité dans le conduit 10.

Enfin, la cartouche interchangeable 3 est maintenue fixée sous la tête 2 par un montage à baïonnette.

Plus spécifiquement, la paroi latérale 16 du boîtier étanche 14 peut comporter plusieurs pattes 59 sensiblement rigides, qui font saillie radialement vers l'extérieur et qui peuvent être réparties angulairement de façon régulière autour de l'axe Z. Ces pattes 59 peuvent par exemple être au nombre de 4 et être réparties à 90° les unes des autres.

Chacune de ces pattes 59 s'engage dans une fente 60 ménagée dans un bossage 61 de la jupe 55 de l'embase 2b.

La fente 60 de chaque bossage 61 débouche axialement vers le bas à sa première extrémité, et se prolonge horizontalement au dessus d'un rebord inférieur 62 du bossage 61 correspondant, jusqu'à une deuxième extrémité. Chaque patte 59 de la cartouche interchangeable peut ainsi pénétrer axialement dans la fente 60 à sa première extrémité, par un mouvement d'emboîtement vers le haut de la cartouche interchangeable 3, puis se déplacer horizontalement jusqu'à la deuxième extrémité de la fente 60, au dessus du rebord 62, par rotation de la cartouche interchangeable 3 autour de l'axe Z.

Au cours de ce mouvement de rotation, chaque patte 59 coopère par effet de came avec une surface de came 63 orientée vers le haut et présentant une forme de pente inclinée vers le haut à partir de la première extrémité de la fente 60.

Ainsi, lors de la rotation de la cartouche 3, l'ensemble de cette cartouche se déplace légèrement vers le haut du fait de la coopération entre les pattes 59 et les surfaces de came 63 correspondantes, en comprimant élastiquement le joint annulaire 20.

Lorsque chaque patte 59 arrive à la deuxième extrémité de la fente 60 correspondante, ladite patte 59 retombe dans une encoche ménagée vers le bas dans la face supérieure du rebord 62 correspondant, et est maintenue engagée dans cette encoche du fait de l'élasticité du joint annulaire 20.

Ainsi, la cartouche interchangeable 3 peut être montée facilement et est maintenue fixée de façon fiable sous la tête 2 par engagement élastique entre les pattes 59 et les rebords 62 correspondants.

La cartouche interchangeable 3 du deuxième mode de réalisation de l'invention peut être conditionnée avant montage d'une façon identique ou similaire à la cartouche interchangeable 3 du premier mode de réalisation.

## Revendications

1. Filtre à liquide pour moteur à combustion interne, comprenant :
- une tête (2) comportant une entrée de liquide (4) et une sortie de liquide (5),
- une cartouche interchangeable (3) fixée à la tête de façon amovible et comprenant elle-même :
. un boîtier étanche (14) délimitant un espace intérieur (15) creux,
. un élément filtrant (29) séparant l'espace intérieur du boîtier étanche en un espace d'amont (15a) et un espace d'aval (34),
. un premier dispositif d'étanchéité (20) reliant de façon étanche l'entrée de liquide (4) à l'espace d'amont (15a),
. un deuxième dispositif d'étanchéité reliant de façon étanche la sortie de liquide (5) à l'espace d'aval (34),
**caractérisé en ce que** la cartouche interchangeable (3) est solidarisée axialement avec la tête (2) par au moins deux pattes (36 ; 59) portées par un premier élément choisi parmi la tête (2) et la cartouche interchangeable (3), lesdites pattes coopérant par engagement élastique avec au moins un rebord (43 ; 62) appartenant à un deuxième élément choisi parmi la tête (2) et la cartouche interchangeable (3).

2. Filtre selon la revendication 1, dans lequel lesdites pattes (36) sont élastiques et comportent des becs d'accrochage (38) engagés élastiquement sur ledit rebord (43).

3. Filtre selon la revendication 2, dans lequel les premier et deuxième dispositifs d'étanchéité présentent une symétrie de révolution autour d'un même axe central (Z), ledit rebord (43) est circulaire et centré sur l'axe central (Z), et la cartouche interchangeable (3) est montée sur la tête (2) de façon à pouvoir tourner autour de l'axe central (Z).

4. Filtre selon la revendication 3, dans lequel les becs d'accrochage (38) de toutes les pattes élastiques (36) sont engagés sur le même rebord circulaire (43), qui s'étend sur un tour complet.

5. Filtre selon l'une quelconque des revendications 2 à 4, dans lequel le rebord (43) appartient à la tête (2) et les pattes élastiques (36) appartiennent au boîtier (14) de la cartouche interchangeable.

6. Filtre selon la revendication 5, dans lequel les pattes élastique (36) sont moulées en matière plastique, d'une seule pièce avec au moins une partie du boîtier (14) de la cartouche interchangeable.

7. Filtre selon l'une quelconque des revendications 2 à 6, dans lequel chaque patte élastique (36) s'étend parallèlement à l'axe central (Z) entre une extrémité arrière (37) formant un organe d'appui et une extrémité avant qui comporte le bec d'accrochage (38) de ladite patte élastique, la patte élastique étant montée sur une charnière élastique (41) entre lesdites extrémités avant et arrière (37, 38) de façon qu'un appui sur ledit organe d'appui déplace le bec d'accrochage (38) radialement vers l'extérieur en le dégageant du rebord (43).

8. Filtre selon l'une quelconque des revendications 2 à 7, dans lequel le bec (38) de chaque patte élastique comporte une surface de came (39) inclinée qui s'étend en biais radialement vers l'intérieur depuis une extrémité avant de la patte élastique vers l'extrémité arrière et qui est disposée pour coopérer par effet de came avec le rebord (43) lorsque la cartouche interchangeable est engagée par emboîtement axial sur la tête (2), en repoussant alors élastiquement le bec d'accrochage (38) radialement vers l'extérieur, le bec d'accrochage comportant en outre une face d'arrêt (40) qui est orientée à l'opposé de la surface de came (39), ladite face d'arrêt étant adaptée pour venir s'engager élastiquement contre le rebord circulaire (43).

9. Filtre selon la revendication 1, dans lequel les premier et deuxième dispositifs d'étanchéité (20, 35) présentent une symétrie de révolution autour d'un même axe central (Z), les pattes (59) coopèrent avec le rebord (62) par un montage à baïonnette (60, 63, 64), et la cartouche interchangeable (3) est sollicitée élastiquement à l'écartement par rapport à la tête (2).

10. Filtre selon la revendication 9, dans lequel chaque rebord (62) comporte une face d'appui dotée d'un évidemment (64) dans lequel est engagée une des pattes (59), ledit rebord délimitant une ouverture (60) débouchant axialement, adaptée pour permettre le passage de ladite patte lors du montage et du démontage de la cartouche interchangeable (3).

11. Filtre selon l'une quelconque des revendications 9 et 10, dans lequel le rebord (62) appartient à la tête (2) et les pattes (59) appartiennent au boîtier (14) de la cartouche interchangeable.

12. Filtre selon la revendication 11, dans lequel les pattes (59) sont moulées en matière plastique, d'une seule pièce avec au moins une partie du boîtier (14) de la cartouche interchangeable.

13. Filtre selon l'une quelconque des revendications précédentes, constituant un filtre à gazole dans lequel la tête (2) comporte au moins un élément choisi parmi un dispositif de dégazage de gazole (11) et un dispositif de réchauffage de gazole (6).

14. Filtre selon l'une quelconque des revendications précédentes, dans lequel la tête (2) comporte d'une part, une embase (2b) qui est destinée à être fixée à un support externe et qui est fixée au boîtier (14) au moyen desdites pattes (59), et d'autre part, une coiffe (2a) qui est soudée à l'embase et qui comporte au moins un raccord (4a) appartenant à l'entrée de liquide et un raccord (5a) appartenant à la sortie de liquide.

15. Filtre selon la revendication 14, dans lequel la coiffe (2a) et l'embase (2b) sont soudées ensemble le long de deux parties annulaires (50, 54a) en regard l'une de l'autre, ces deux parties annulaires étant symétriques de révolution autour d'un même axe central (Z).

16. Filtre selon la revendication 14 ou la revendication 15, dans lequel la coiffe (2a) et l'embase (2b) sont réalisées en matière plastique.

17. Filtre selon l'une quelconque des revendications 14 à 16, dans lequel la coiffe (2a) comporte en outre un dispositif de réchauffage (6) pour réchauffer le liquide arrivant par l'entrée de liquide (4), et au moins un connecteur électrique (8) relié au dispositif de réchauffage.

18. Filtre selon l'une quelconque des revendications 14 à 17, dans lequel la coiffe comporte en outre au moins un dispositif d'élimination d'air (11 ; 52).

19. Filtre selon l'une quelconque des revendications précédentes, constituant un filtre à gazole dans lequel la cartouche interchangeable (3) comporte au moins un élément choisi parmi un dispositif de purge d'eau (27) et un dispositif de détection d'eau (25).

20. Filtre selon l'une quelconque des revendications précédentes, dans lequel le boîtier (14) comporte d'une part, une paroi latérale (16) qui est fixée à la tête (2) au moyen desdites pattes (36 ; 59), et d'autre part, un fond (21) qui ferme le boîtier (14) à l'opposé de la tête (2), le fond étant soudé à la paroi latérale.

21. Filtre selon la revendication 20, dans lequel la paroi latérale (16) et le fond (21) sont soudés ensemble le long de deux parties annulaires (22, 23) en regard l'une de l'autre, ces deux parties annulaires étant symétriques de révolution autour d'un même axe central (Z).

22. Filtre selon la revendication 20 ou la revendication 21, dans lequel la paroi latérale (16) et le fond (21) du boîtier sont réalisés en matière plastique.

23. Filtre selon l'une quelconque des revendications 20 à 22, dans lequel le fond (21) du boîtier comporte au moins un élément choisi parmi un dispositif de purge d'eau (27) et un dispositif de détection d'eau (25).

24. Cartouche interchangeable destinée à se fixer à la tête (2) d'un filtre selon l'une quelconque des revendications précédentes, cette cartouche interchangeable comportant :
- un boîtier étanche (14) qui délimite un espace intérieur (15) creux qui communique avec l'extérieur par l'intermédiaire de deux passages de liquide (18, 35) associés respectivement à des premier et deuxième dispositifs d'étanchéité annulaires centrés sur un même axe central (Z) et destinés à relier respectivement les deux passages de liquide indépendamment l'un de l'autre à une entrée de liquide (4) et à une sortie de liquide (5) appartenant à la tête du filtre,
- un élément filtrant (29) séparant l'espace intérieur du boîtier étanche en un espace d'amont (15a) et un espace d'aval (34),
le boîtier (14) comportant au moins deux pattes (36 ; 59) adaptées pour coopérer par engagement avec au moins un rebord (43 ; 62) appartenant à la tête (2) du filtre.

25. Cartouche interchangeable selon la revendication 24, dans laquelle au moins un des passages de liquide (18, 35) est fermé de façon étanche par un obturateur (45) adapté pour être ouvert avant mise en service de la cartouche.

26. Cartouche interchangeable selon la revendication 25 dans laquelle l'obturateur (45) ferme au moins le passage de liquide (35) communiquant avec l'espace d'aval (34).

27. Cartouche interchangeable selon la revendication 25 ou 26, dans laquelle chacun des deux passages de liquide (18, 35) est fermé de façon étanche par un obturateur (45) adapté pour être ouvert avant mise en service de la cartouche.

28. Cartouche interchangeable selon la revendication 27, dans laquelle les deux passages de liquide (18, 35) sont fermés par le même obturateur.

29. Cartouche interchangeable selon l'une quelconque des revendications 25 à 28, dans laquelle l'obturateur (45) est un opercule détachable.

30. Cartouche interchangeable selon l'une quelconque des revendications 25 à 28 dans laquelle l'obturateur (45) est un opercule déchirable.
